# EUROPEAN PATENT SPECIFICATION

(11) **EP 3 760 769 B1**
(45) Date of publication and mention of the grant of the patent: **08.04.2026**
(21) Application number: 19183845.7
(22) Date of filing: 02.07.2019
(51) Int. Cl.: D01D 4/02, D01F 6/62, D01D 5/253, B01D 39/16, D01F 6/92, D01F 8/04, D01F 8/14, D04H 1/4291, D04H 1/4334, D04H 1/435, D04H 1/4391, D04H 3/011

(54) **IRREGULARLY SHAPED POLYMER FIBERS**
UNREGELMÄSSIG GEFORMTE POLYMERFASERN
FIBRES DE POLYMÈRE À FORME IRRÉGULIÈRE

(43) Date of publication of application: 06.01.2021
(73) Proprietor: Carl Freudenberg KG, 69469 Weinheim (DE)
(72) Inventor: Tseng, Shih Wen, Taoyuan, Taiwan 33751 (CN); Hess, Michael, 67655 Kaiserslautern (DE); Roehring, Volker, Dr., 69469 Weinheim (DE); Chiou, Hsien Fang, Taoyuan, Taiwan 33750 (CN); Huang, Wie Ren, Taoyuan, Taiwan 330 (CN); Lin, Huan Hsiang, Taoyuan, Taiwan 32055 (CN)

(56) References cited:
- JP-A- 2005 105 434
- US-A1- 2013 133 980
- US-A1- 2017 226 673

## Description

### BACKGROUND

The present invention relates to a polymeric fiber of irregular shape, comprising an at least six-fingered sectional area, a filter comprising the polymeric fiber, a nonwoven fabric comprising the polymeric fiber, the use of the polymeric fiber and a spinneret designed to provide said polymeric fibers.

### STATE OF THE ART

Polymeric fibers are obtained by various known spinning processes. Fibers from polymers that become flowable and pliable under heating, in particular thermoplastics, can be produced by melt spinning processes. Melt spinning is a specialized form of extrusion, wherein a polymeric material is melted in order to obtain a polymer melt which is then passed through a spinneret, i.e. a type of die used to form continuous filaments. In a usual embodiment, the spinneret comprises a metal plate with an arrangement (pattern) of small holes through which the polymer melt is passed into the air or a liquid for solidification and fiber formation. The design of the spinneret varies greatly. Conventional spinneret orifices are circular and produce fibers that are round in cross section. Capillary spinneret orifices enable extrusion of filaments with small diameters of one denier or less. The extruded molten filaments exiting the spinneret are cooled to obtain the final fibers which have the shape of the outlet openings of the spinneret plate. It is known to use spinneret orifices having shaped holes to obtain fibers of different shapes and with various characteristics.

Different shapes of fibers and in particular multi-lobal fibers have been known for many years. The known fibers can be of a triangular cross section, so called trilobal fibers. The fibres can also be of a square shape or can be a star shaped fiber with four, five, six or more fingers. Furthermore, fibers showing flat oval, T-shape, M-shape, S-shape, Y-shape, or H-shape cross sections are known.

The single fibers (filaments) can be spun to yarns, and a number of yarns can be plied together for producing threads.

One special aspect is the use of polymer fibers for the manufacture of filters for various applications. Today, filters are used on a large scale for a variety of purposes. Thus, in the automotive area filters are used e.g. as cabin air filters to protect the vehicle occupants from pollen, soot, fine dust, allergens, gases, etc. Engine intake air filters remove contaminants that may have a negative impact on the combustion process and the sensor systems of the cars. In fuel cell vehicles there is a demand for special intake air filters and humidifiers. In the various sectors of industry, filters are employed inter alia in gas turbines and compressors, in the food and beverage industry, for air pollution control, for corrosion control, for cleanrooms and pharmaceutical production. Filter further find use in hospitals and medical facilities. In everyday life, filters are used e.g. in vacuum cleaners as filters for bagless vacuum cleaners, for odor removal, as motor protection filters and for the exhaust air. Filters can be employed in many different forms, e.g. filter mats, comprising thermally bonded nonwovens made of polymeric fibers.

EP 1619283 describes a method for producing a tufted nonwoven fabric, wherein fibers which are divergent from a round fiber cross section are used for tuft backing.

US 3351205 describes twisted strands for nonwoven fibers. This document discloses that 6-finger filaments (star-shaped configuration in a radial cross-section having six oppositely disposed lobes) are useful for twisted strands (see fig. 32). The 6-finger filaments are regular, and every finger has the same width and the same distance from the centre.

US 5069970 describes polyester based fibers comprising polyolefins. The fibers have different shapes, e.g. star-shape and have 6-fingers (fig. 3). However, the shapes of those fibers are regular, too.

US 6787227 describes filaments having at least five vertices. The cross-section of the filaments is preferably star-shaped. However, also these filaments have a regular shape.

WO 2017/006234 discloses polyester fibers having a gear-shaped cross-section which seems to be regular.

EP 3069625 relates to filaments for artificial hair. The fiber has a multi-lobal shape having three or more interlobe gap regions. An irregular 6-finger shape filament is not described.

EP 1966416 describes a 6-finger filament with three major and three minor lobes. However, the major lobes have the same width and length, and the minor lobes have also the same width and length, i.e. they are regular.

WO 2006/133036 describes mixtures of various shaped fibers to provide controllable improvements in opacity, barrier properties, and mechanical properties. The variety of cross sections include solid round fibers, hollow round fibers, multi-lobal solid fibers, hollow multi-lobal fibers, crescent shaped fibers, square shaped fibers, and any combination thereof.

Further relevant information can be found in documents US 2013/133980, US 2017/226673 and JP2005105434.

There is a need for fibers whose property profile can be adapted individually. A special need e.g. exists for fibers that are suitable for the manufacture of nonwovens that can be used as multi purpose filtration substrate. Thus, the fibers and the resulting nonwovens should e.g. be suitable for the production of air permeable filters, suitable for high throughput, low pressure drop applications. Currently, there can be seen a demand for fibers which have lighter weight and/or fibers which have a larger fiber diameter for low pressure drop applications. In any case, the maintenance of excellent filtration performance is desired. Therefore, one task is the development of fibers having high fiber diameter and larger surface area in order to meet the requested low pressure drop requirement with at the same time improved particle capture performance.

Accordingly, it is an object of the invention to provide new fibers or new compositions of fibers that allow for the manufacture of nonwovens with good application properties, in particular for filter application. In particular, it is an object of the invention to provide optimized fibers having both a larger surface area and high fiber diameter in order to provide fibers for high filtration performance.

The problem underlying the invention is solved by the polymeric fibers according to the invention comprising an at least six-fingered sectional area.

The polymeric fibers according to the invention have at least one of the following advantages:
- Due to the larger surface the particle holding capacity of filters based on these fibers is increased.
- Due to the larger fiber diameter the pressure drop of filters based on these fibers is reduced.
- Due to the high surface area of the fibers the dirt holding capacity of filters and wiping mops based on these fibers is high.
- The high stiffness results in a higher durability.
- With filters on the basis of said fibers a high permeability and depth filtration are possible which results in efficiency sustained cleaning of air passed through the filters with low pressure drop.

### SUMMARY OF THE INVENTION

The invention relates to a polymeric fiber comprising an at least six-fingered sectional area, having at least one of the following properties:
- the fingers are positioned unsymmetrically to the each of the central axes,
- the sectional area of the fiber has no rotational axis,
- is constructed as a multicomponent filament,
wherein at least one finger has a distance from the finger tip to the center of the maximum circle that fits completely in the cross-sectional area of the fiber (inner circle rᵢ) that is different from at least one other finger, and wherein the inner circle rᵢ is from 5 µm to 50 µm.

The invention also relates to a nonwoven fabric comprising the polymeric fiber as defined above and below.

The invention also relates to a filter material comprising the polymeric fiber as defined above and below.

The invention also relates to the use of the polymeric fiber as defined above and below for the preparation of nonwoven fabrics.

The invention also relates to a spinneret comprising capillary spinneret orifices comprising a pattern of arranged holes designed to provide polymeric fibers as defined above and below.

### DETAILED DESCRIPTION

In the sense of the invention the term "inner circle rᵢ" is the maximum circle that fits completely in the cross sectional area of the fiber.

In the sense of the invention the term "outer circle rₒ" is the minimum circle that completely surrounds the cross sectional area of the fiber.

The term "length" of each finger is the distance from the finger tip to the center of the inner circle rᵢ.

The term "fiber" denotes an elongated body, wherein the length dimension is greater than the transverse dimension of width and thickness. Thus, the term "fiber" is synonymously used for filament.

### Fibers:

The polymeric fibers according to the invention generally have an irregular shape of the sectional area. Generally, the sectional area of the fiber has no rotational axis. The sectional area of the fibers has essentially straight side portions that extend outwardly and are terminated in a convex tip, the so called fingers. Generally, the fingers are positioned unsymmetrically to the each of the central axes. The fingers can be tapered inwardly, from wide to narrow, moving away from the central axis in the direction of the convex tip, or the finger can be tapered outwardly, from narrow to wide narrow, moving away from the central axis in the direction of the convex tip.

The polymeric fibers according to the invention comprise an at least six-fingered sectional area, preferably a six-fingered sectional area.

In a preferred embodiment, the at least six-fingered sectional area of the polymeric fiber comprises at least one finger which has a distance from the finger tip to the center of the maximum circle that fits completely in the cross sectional area of the fiber (inner circle rᵢ) that is different from at least one other finger.

Preferably, the at least six-fingered sectional area comprises an inner circle rᵢ, which is in the range of from 5 µm to 50 µm, more preferably from 10 µm to 30 µm.

Preferably, the at least six-fingered sectional area comprises an outer circle rₒ (the minimum circle that completely surrounds the cross sectional area of the fiber) which is in the range of from 10 µm to 10 µm, more preferably from 15 µm to 50 µm.

In a preferred embodiment, the ratio of rₒ : rᵢ is in the range of from 3 to 1.01, preferably from 1.5 to 1.01, especially 1.5 to 1.25.

The length of the fingers, that means the distance from the finger tip to the center of the inner circle rᵢ is preferably at least 5 µm to 100 µm, more preferably from 10 µm to 50 µm.

The width of the fingers at the widest point of the finger is preferably at least 5 µm to 100 µm, more preferably from 10 µm to 50 µm.

Each axe of the finger is angularly spaced from the closest axe of the finger, wherein the angle between the axis of each finger is a random distribution from 1° to 170°.

A special feature of the fingers of the fibers is the ratio of the shortest and the longest finger. Therefore, polymeric fibers according to the invention, wherein the ratio of the distance from the finger tip to the center of the inner circle rᵢ of the shortest and the longest finger is in the range of 25:100 to 60:100, are preferred.

The titer of the fibers can be measured in terms of linear mass density, i.e. the weight of a given length of fiber. It is preferred that the polymeric fibers according to the invention have a titer in the range of from 5 to 14 dtex (SI-unit: 1 dtex = 1 g/10000 m).

### Material of the fibers:

In principle, the polymeric fibers according to the invention may be formed from any fiber-forming polymers, i.e. polymers that can be converted into a melt or solution that satisfies the conditions of spinnability.

Thermoplastic polymeric materials may be used in the present invention. In the sense of the invention thermoplastic polymers are those which can be reversibly deformed above a certain temperature, whereby this process can be repeated as often as desired. Below this specific temperature, these are non-deformable substances. The thermoplastic polymeric material must have rheological characteristics suitable for melt spinning. The molecular weight of the polymer must be sufficient to enable entanglement between polymer molecules and yet low enough to be melt spinnable. For melt spinning, thermoplastic polymers having molecular weights below about 1,000,000 g/mol, preferably from about 5,000 g/mol to about 750,000 g/mol, more preferably from about 10,000 g/mol to about 500,000 g/mol and even more preferably from about 50,000 g/mol to about 400,000 g/mol. The thermoplastic polymeric materials must be able to solidify relatively rapidly, preferably under extensional flow, and form a thermally stable fiber structure, as typically encountered in known processes, such as a spin draw process for staple fibers or a spunbond continuous fiber process. Preferred polymeric materials include, but are not limited to, polyesters, polyolefines, polyamides, polylactates, halogen-containing polymers, polyacrylates, polyvinyl acetates, polyvinyl alcohols, polycarbonates, polyurethanes, polystyrenes, polyphenylene sulfides, polysulfones, polyoxymethylenes, polyimides copolymers derived thereof and mixtures thereof.

Suitable polyolefins are selected from polyethylene, polypropylene, poly(1-butene), polyisobutylene, poly(1-pentene), poly(4-methylpent-1-ene), polybutadiene, polyisoprene and polyolefin containing blends. Suitable polyethylenes are selected from HDPE, LDPE, LLDPE, VLDPE; ULDPE and UHMW-PE. Suitable polyolefin blends comprise at least one polyolefin, especially polyethylene, polypropylene or ethylene-propylene-copolymers and at least one different polymer. The different polymer is e.g. selected from graft or copolymers made of polyolefins and α,β-unsaturated carboxylic acids or carboxylic acid anhydrides, polyesters, polycarbonates, polysulfones, polyphenylene sulfides, polystyrenes, polyamides or a mixture of two or more of the mentioned different polymers.

Suitable halogen-containing fiber-forming polymers are polyvinylchloride (PVC), polyvinylidene chloride (PVDC), polyvinylidene fluoride (PVDF) and polytetrafluoroethylene (PTFE).

The polymeric fibers according to the invention may also comprise or consist of at least one non-thermoplastic polymeric material. Suitable non-thermoplastic polymeric materials are regenerated cellulose (in particular viscose rayon, lyocell), cotton, wood pulp, etc. and mixtures thereof. The polymeric fibers from non-thermoplastic polymeric material may be produced e.g. by solution or solvent spinning. Regenerated cellulose can be produced by extrusion through capillaries into an acid coagulation bath.

In particular, the polymer fibers according to the invention comprise a polymer selected from polyolefins, polyesters, polyamides and copolymers and mixtures thereof.

The polymeric fibers according to the invention are constructed as multicomponent filaments. A suitable embodiment is a multi-component filament having a polyester, in particular a polyethylene terephthalate, as core material and a co-polyester as finger material.

The polymeric fibers according to the invention are suitable for the formation of fabrics, e.g. non-wovens, that can be advantageously used as filters. The filter substrates may consist of single type of filaments or a combination of different type of filaments.

Different types of filaments can be produced in one step by so called multi-shape spinning by using a spinneret with a combination of orifices having different shapes. Thereby, it is possible to produce multi-layers fabric in one steps. Thus, it is possible to produce filters with different layers, e.g. having a different air permeability. For example, the resulting filter can consist of layers which in the direction of the air stream have a gradient from higher to lower air permeability. The invention allows the production of filters that are effective at removing airborne particles and are characterized by a low pressure drop which is retained over long time of application.

The design of the filaments and the resulting filters can be optimized according to the demanded air flow/air penetration.

It is possible to combine fibers of different shapes and/or different sizes: e.g.
a) Combination of filaments having the same shape but a different denier value (e.g. 12 and 6 denier), e.g. 6 fingers filaments according to the invention in a top-down arrangement.
b) Combination of filaments having different shapes, e.g. round fibers and 6 fingers fibers according to the invention in a top-down arrangement (two layer fabric).
c) Combination of filaments having different shapes, e.g. round fibers and 6 fingers fibers according to the invention and round fibers in a top-down arrangement (three layer fabric).
d) Combination of filaments having different shapes, e.g. 6 fingers fibers according to the invention and round fibers and 6 fingers fibers according to the invention (three layer fabric).
e) Combination of filaments having different shapes, e.g. 6 fingers fibers according to the invention and shapes selected from triangles, 4-, 5-, 6-, 7-, 8-pointed stars, ellipse, H-shape, double H-shape and combinations thereof in a top-down arrangement (two and multi-layer fabric).

### Process:

The polymeric fibers according to the invention in one embodiment are spunmelt fibers. Melt-spinning in the sense of the invention is a kind of thermoplastic extrusion. Melt-spinning includes spunlaid processes, meltblown processes and spunbond processes. Those processes are known to a person skilled in the art.

The first step in producing a fiber is usually a compounding or mixing step. In the compounding step, the raw materials are heated, typically under shear. The shearing in the presence of heat will result in a homogeneous melt of the thermoplastic material and optional non-thermoplastic material. The obtained melt is then placed in an extruder, where the material is mixed and conveyed through capillaries to form fibers. The fibers are then attenuated and collected. The fibers are preferably substantially continuous (i.e., having a length to diameter ratio greater than about 2500:1), and will be referred to as spunlaid fibers.

In a preferred embodiment of the process according to the invention, a spinneret is used comprising capillary spinneret orifices forming a pattern of arranged holes designed to provide polymeric fibers as defined above.

The spinneret comprising a pattern of arranged holes designed to provide polymeric fibers as defined above is also one aspect of the invention.

The fibers may be converted to fabrics by different bonding methods. In a spunbond or meltblown process, the fibers are consolidated using known industry standard technologies. Typical bonding methods include, but are not limited to, calender (pressure and heat), thru-air heat, mechanical entanglement, hydraulic entanglement, needle punching, and chemical bonding and/or resin bonding. For the pressurized heat and thru-air heat bonding methods fibers are required that are thermally bondable. The fibers may also be woven together to form sheets of fabric. This bonding technique is a method of mechanical interlocking. The fibrous fabric may then be incorporated into an article.

Another aspect of the invention is a textile structure, e.g. in the form of woven fabric, knitted fabric, laid scrim, or nonwoven fabric, comprising the polymeric fibers according to the invention. A textile structure in the sense of invention is a combination of fibers or fiber bundles. It can be single or multi-layered. A textile structure in the context of the present invention is defined as woven fabric consisting of at least one layer, preferably more than one layer, single- or multi-layered woven fabric, single- or multi-layered nonwoven fabric single- or multi-layered knitted fabrics, single- or multi-layered laid scrim fabrics, preferably several layers, consisting of parallel fibres, fibre bundles, yarns, twists or ropes, whereby the individual layers of the parallel fibres or fibre bundles of yarns, twists or ropes may be twisted relative to one another, or nonwovens.

A particular aspect of the invention is a nonwoven fabric comprising the polymeric fibers according to the invention. Therefore, a further aspect of the invention is the use of the polymeric fibers as defined above for the preparation of a nonwoven fabric.

Preferably, the nonwoven fabric of the present invention comprises a tuft-backing containing the polymeric fibers according to the invention.

Products comprising or consisting of the polymeric fibers of the invention are preferably used in filters, in particular filters for air, oil and water; vacuum cleaner filters; furnace filters; face masks; coffee filters, etc.

Products comprising or consisting of the polymeric fibers of the invention may further be used for thermal insulation materials and sound insulation materials. They can be employed in nonwovens for one-time use sanitary products, such as diapers, feminine pads and incontinence articles; biodegradable textile fabrics for improved moisture absorption and softness of wear, such as micro fiber or breathable fabrics; structured webs for collecting and removing dust; reinforcements and webs for hard grades of paper, such as wrapping paper, writing paper, newsprint, corrugated paper board, and webs for tissue grades of paper, such as toilet paper, paper towels, napkins and facial tissues. Products comprising or consisting of the polymeric fibers of the invention may further be employed for medical uses, such as surgical drapes, wound dressing, bandages, dermal patches and self-dissolving sutures and dental uses, such as dental floss and toothbrush bristles. Products comprising or consisting of the polymeric fibers of the invention may further be used for products that absorb water and oil and may find use in oil or water spill clean-up or controlled water retention and release for agricultural or horticultural applications. The resultant fibers or fiber webs may also be incorporated into other materials, such as concrete, plastics, wood pulp, etc. to form composite materials, which can be used as building materials, such as walls, support beams, pressed boards, dry walls and backings, and ceiling tiles.

A further aspect of the invention is the use of the polymeric fibers as defined above for the preparation of a nonwoven fabric.

In one preferred embodiment, the polymeric fibers as defined above can be used for filters and carpets, in particular carpet tiles, wall-to-wall carpets, door mats, throw-in mats, wherein automotive tuft carpets are preferred.

A special embodiment of the invention is the use of the polymeric fiber according to the invention as carpet backing and filter.

A further special embodiment of the invention is a polymer fiber composition comprising at least two different polymer fibers, wherein at least one of the fibers is a polymeric fiber as defined above, comprising an at least six-fingered sectional area. The afore-mentioned definitions of suitable and preferred fibers comprising an at least six-fingered sectional area are fully referred to here.

The at least two different polymer fibers differ in at least one of the following properties:
- shape of the sectional area,
- titer of the fibers,
- chemical composition of the fibers.

Preferred are multi-titer, single shape filaments or multi shape filaments.

In a preferred embodiment, the at least two different polymer fibers are prepared in a single-stage process, in particular using one single spinneret.

The invention is described in more detail in the following examples.

### EXAMPLES

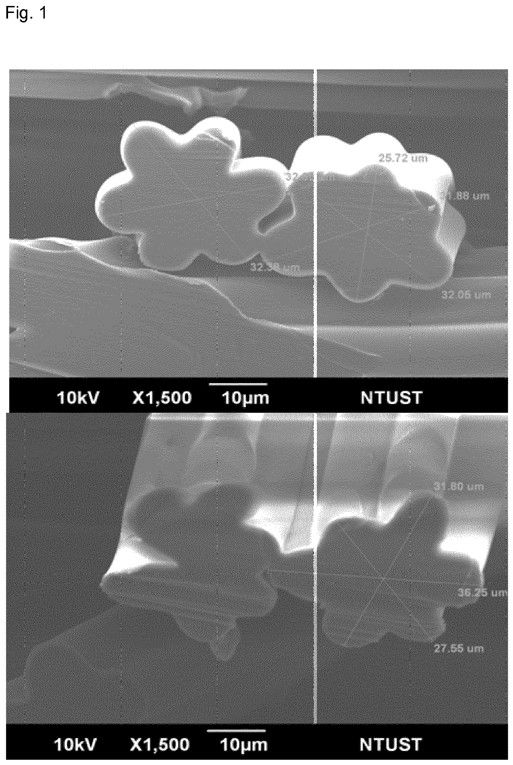

Figure 1 illustrates a six-fingered polymeric fiber according to the invention.

### Example 1:

A polyester spunbound fabric having two layers is produced, wherein both layers comprise six-fingered polymeric fibers according to the invention. A special spinneret is used that contains mixtures of fiber shapes and a metering plate to feed polymers to each orifice. One of the layers comprises multi-component filaments comprising a polyethylene terephthalate core material and fingers of a co-polyester material. The other layer comprises a co-polyester material. The fibers are thermally bonded together using heat and pressure.

The resulting fabric consists of two layers, one with high and the other with low air permability. Air filters comprising this fabric are effective at removing airborne particles and are characterized by a low pressure drop which is retained over long time of application.

### Example 2:

A polyester spunbound fabric having three layers is produced, wherein the middle layer comprises six-fingered polymeric fibers according to the invention. The upper layer is formed from solid round fibers. The bottom layer is formed from double-H-shaped fibers, and the middle layer is formed from six-fingered polymeric fibers according to the invention. A special spinneret is used that contains mixtures of fiber shapes and a metering plate to feed polymers to each orifice. The middle layer comprises multi-component filaments comprising a polyethylene terephthalate core material, and fingers of a co-polyester material. The other layers comprise a co-polyester material. The fibers are thermally bonded together using heat and pressure.

The resulting fabric consists of three layers with high, low and extra-low air permability, respectively. Air filters comprising this fabric are effective at removing airborne particles and are characterized by a low pressure drop which is retained over long time of application.

## Claims

1. A polymeric fiber comprising an at least six-fingered sectional area, having at least one of the following properties:
- the fingers are positioned unsymmetrically to the each of central axes,
- the sectional area of the fiber has no rotational axis,
- is constructed as multicomponent filament,
wherein at least one finger has a distance from the finger tip to the center of the maximum circle that fits completely in the cross sectional area of the fiber (inner circle rᵢ) that is different from at least one other finger and wherein inner circle rᵢ is from 5 µm to 50 µm.

2. The polymeric fiber according to claim 1, wherein the multicomponent filament having a polyester as core material.

3. The polymeric fiber according to claim 1 or 2, wherein the finger material is a co-polyester.

4. The polymeric fiber according to to any one of the preceding claims, wherein the inner circle rᵢ is from 10 µm to 30 µm.

5. The polymeric fiber according to any one of the preceding claims, wherein the minimum circle that completely surrounds the cross sectional area of the fiber (outer circle rₒ) is from 10 µm to 100 µm, preferably from 15 µm to 50 µm.

6. The polymeric fiber according to any one of the preceding claims, wherein the ratio of rₒ : rᵢ is in the range of from 3 to 1.01, preferably from 1.5 to 1.01, especially 1.5 to 1.25.

7. The polymeric fiber according to any one of the preceding claims, wherein the distance from the finger tip to the center of the inner circle rᵢ is at least 5 µm to 100 µm, preferably from 10 µm to 50 µm.

8. The polymeric fiber according to any one of the preceding claims, wherein the ratio of the distance from the finger tip to the center of the inner circle rᵢ of the shortest and the longest finger is in the range of 25:100 to 60:100.

9. The polymeric fiber according to any one of the preceding claims, wherein the fiber is selected from thermoplastic polymers, preferably selected from polyesters, polyolefines, polyamides, polylactates, copolymers derived thereof and mixtures thereof.

10. The polymeric fiber according to any one of the preceding claims, wherein the fiber has a titer in the range of from 5 to 14 dtex.

11. A nonwoven fabric comprising the polymeric fiber as defined in claims 1 to 10.

12. The nonwoven fabric according to claim 11, comprising a tuft-backing containing the polymeric fiber is as defined in claims 1 to 10.

13. A filter material comprising the polymeric fiber comprising an at least six-fingered sectional area, having at least one of the following properties:
- the fingers are positioned unsymmetrically to the each of the central axes,
- the sectional area of the fiber has no rotational axis,
- is constructed as multicomponent filament.

14. Use of the polymeric fiber as defined in claims 1 to 10 for the preparation of nonwoven fabric.

15. Use according to claim 14, for filters and carpets, in particular carpet tiles, wall-to-wall carpets, door mats, throw-in mats or automotive tuft carpets.

16. Use according to claims 14 or 15, wherein the polymeric fiber according to claims 1 to 11 is employed as carpet backing.

17. A spinneret comprising capillary spinneret orifices forming a pattern of arranged holes designed to provide polymeric fibers as defined in any of claims 1 to 10.

## Patentansprüche

1. Polymerfaser, umfassend eine mindestens sechsfingerige Querschnittfläche, die mindestens eine der folgenden Eigenschaften aufweist:
- die Finger sind unsymmetrisch zu jeder der Zentralachsen positioniert,
- die Querschnittfläche der Faser hat keine Rotationsachse,
- sie ist als Multikomponentenfilament konstruiert,
wobei mindestens ein Finger einen Abstand von der Fingerspitze zum Zentrum des maximalen Kreises aufweist, der vollständig in die Querschnittfläche der Faser passt (Innenkreis rᵢ), der sich von mindestens einem anderen Finger unterscheidet, und wobei der Innenkreis rᵢ 5 µm bis 50 µm beträgt.

2. Polymerfaser nach Anspruch 1, wobei das Multikomponentenfilament einen Polyester als Kernmaterial aufweist.

3. Polymerfaser nach Anspruch 1 oder 2, wobei das Fingermaterial ein Copolyester ist.

4. Polymerfaser nach einem der vorhergehenden Ansprüche, wobei der Innenkreis rᵢ 10 µm bis 30 µm ist.

5. Polymerfaser nach einem der vorhergehenden Ansprüche, wobei der minimale Kreis, der die Querschnittfläche der Faser vollständig umgibt (Außenkreis r₀), 10 µm bis 100 µm, vorzugsweise 15 µm bis 50 µm ist.

6. Polymerfaser nach einem der vorhergehenden Ansprüche, wobei das Verhältnis von rₒ:rᵢ im Bereich von 3 bis 1,01, vorzugsweise 1,5 bis 1,01, insbesondere 1,5 bis 1,25 liegt.

7. Polymerfaser nach einem der vorhergehenden Ansprüche, wobei der Abstand von der Fingerspitze zum Zentrum des Innenkreises rᵢ mindestens 5 µm bis 100 µm, vorzugsweise 10 µm bis 50 µm beträgt.

8. Polymerfaser nach einem der vorhergehenden Ansprüche, wobei das Verhältnis des Abstands von der Fingerspitze zum Zentrum des Innenkreises rᵢ des kürzesten und des längsten Fingers im Bereich von 25:100 bis 60:100 liegt.

9. Polymerfaser nach einem der vorhergehenden Ansprüche, wobei die Faser ausgewählt ist aus thermoplastischen Polymeren, vorzugsweise ausgewählt ist aus Polyestern, Polyolefinen, Polyamiden, Polylactaten, davon abgeleiteten Copolymeren und Mischungen davon.

10. Polymerfaser nach einem der vorhergehenden Ansprüche, wobei die Faser einen Titer im Bereich von 5 bis 14 dtex hat.

11. Vliesstoff, umfassend die Polymerfaser wie in den Ansprüchen 1 bis 10 definiert.

12. Vliesstoff nach Anspruch 11, umfassend einen Tuft-Rücken, der die Polymerfaser, wie in den Ansprüchen 1 bis 10 definiert, enthält.

13. Filtermaterial, umfassend die Polymerfaser, umfassend eine mindestens sechsfingerige Querschnittfläche, die mindestens eine der folgenden Eigenschaften aufweist:
- die Finger sind unsymmetrisch zu jeder der Zentralachsen positioniert,
- die Querschnittfläche der Faser hat keine Rotationsachse,
- sie ist als Multikomponentenfilament konstruiert.

14. Verwendung der Polymerfaser, wie in den Ansprüchen 1 bis 10 definiert, zur Herstellung von Vliesstoff.

15. Verwendung nach Anspruch 14 für Filter und Teppiche, insbesondere Teppichfliesen, Teppichböden, Türmatten, Einlegematten oder Tuftteppiche für Kraftfahrzeuge.

16. Verwendung nach den Ansprüchen 14 oder 15, wobei die Polymerfaser gemäß den Ansprüchen 1 bis 11 als Teppichrücken verwendet wird.

17. Spinnkopf, umfassend Kapillarspinnkopföffnungen, die ein Muster aus angeordneten Löchern bilden, das konzipiert ist, um Polymerfasern, wie in einem der Ansprüche 1 bis 10 definiert, bereitzustellen.

## Revendications

1. Fibre polymérique comprenant une surface de section d'au moins six doigts, ayant au moins une des propriétés suivantes :
- les doigts sont disposés de façon asymétrique par rapport à chacun des axes centraux,
- la surface de section de la fibre ne présente pas d'axe de rotation,
- est construite comme filament multicomposant,
dans laquelle au moins un doigt a une distance entre la pointe du doigt et le centre du cercle maximal qui s'ajuste complètement dans la surface de section transversale de la fibre (cercle interne rᵢ) qui est différente d'au moins un autre doigt et dans laquelle le cercle interne rᵢ est de 5 µm à 50 µm.

2. Fibre polymérique selon la revendication 1, dans laquelle le filament multicomposant a un polyester comme matériau d'âme.

3. Fibre polymérique selon la revendication 1 ou 2, dans laquelle le matériau du doigt est un co-polyester.

4. Fibre polymérique selon l'une quelconque des revendications précédentes, dans laquelle le cercle interne rᵢ est de 10 µm à 30 µm.

5. Fibre polymérique selon l'une quelconque des revendications précédentes, dans laquelle le cercle minimum qui entoure complètement la surface de section transversale de la fibre (cercle externe rₒ) est de 10 µm à 100 µm, de préférence de 15 µm à 50 µm.

6. Fibre polymérique selon l'une quelconque des revendications précédentes, dans laquelle le rapport rₒ : rᵢ est dans la plage de 3 à 1,01, de préférence de 1,5 à 1,01, en particulier de 1,5 à 1,25.

7. Fibre polymérique selon l'une quelconque des revendications précédentes, dans laquelle la distance de la pointe du doigt au centre du cercle interne rᵢ est d'au moins 5 µm à 100 µm, de préférence de 10 µm à 50 µm.

8. Fibre polymérique selon l'une quelconque des revendications précédentes, dans laquelle le rapport de la distance de la pointe du doigt au centre du cercle interne rᵢ du doigt le plus court et du doigt le plus long est dans la plage de 25:100 à 60:100.

9. Fibre polymérique selon l'une quelconque des revendications précédentes, dans laquelle la fibre est choisie parmi les polymères thermoplastiques, de préférence choisie parmi les polyesters, les polyoléfines, les polyamides, les polylactates, les copolymères dérivés de ceux-ci et les mélanges de ceux-ci.

10. Fibre polymérique selon l'une quelconque des revendications précédentes, dans laquelle la fibre a un titre dans la plage de 5 à 14 dtex.

11. Tissu non tissé comprenant la fibre polymérique telle que définie dans les revendications 1 à 10.

12. Tissu non tissé selon la revendication 11, comprenant un support de tuftage contenant la fibre polymérique telle que définie dans les revendications 1 à 10.

13. Matériau de filtre comprenant la fibre polymérique comprenant une surface de section d'au moins six doigts, ayant au moins l'une des propriétés suivantes :
- les doigts sont disposés de façon asymétrique par rapport à chacun des axes centraux,
- la surface de section de la fibre ne présente pas d'axe de rotation,
- est construite comme filament multicomposant.

14. Utilisation de la fibre polymérique telle que définie dans les revendications 1 à 10 pour la préparation d'un tissu non tissé.

15. Utilisation selon la revendication 14, pour des filtres et des tapis, en particulier des dalles de tapis, des tapis de mur à mur, des paillassons, des tapis de réception ou des tapis de tuftage d'automobile.

16. Utilisation selon la revendication 14 ou 15, dans laquelle la fibre polymérique selon les revendications 1 à 11 est utilisée comme support de tapis.

17. Filière comprenant des orifices de filière capillaires formant un motif de trous agencés conçus pour fournir des fibres polymères telles que définies dans l'une quelconque des revendications 1 à 10.
